# EUROPEAN PATENT APPLICATION

(11) **EP 1 233 355 A1**
(43) Date of publication of application: **21.08.2002**
(21) Application number: 01305890.4
(22) Date of filing: 09.07.2001
(51) Int. Cl.: G06F 17/60

(54) **Automated contract engaging apparatus**

(30) Priority: 15.02.2001 JP 2001038212
(71) Applicant: FUJITSU LIMITED, Kawasaki-shi, Kanagawa 211-8588 (JP)
(72) Inventor: Kogure, Kenji, c/o Fujitsu Terminal, Maebashi-shi, Gunma 371-0855 (JP)
(74) Representative: Fenlon, Christine Lesley

(57) **Abstract**

An automated contract engaging apparatus is disclosed which provides a fast and convenient way of engaging into a contract. The apparatus has a display (10), a display controller (20), and a contract processor (30). The display controller (20) controls the display (10) so as to show on its screen a primary input screen image (41), through which the personal data of a representative customer of the group is to be input as first registration data, and an auxiliary input screen image (42, 42"), through which at least the name of each of the remaining customers of the group is to be input as second registration data. The contract processor processes and executes the single collective contractor the individual contracts with respect to the plural customers based on the first registration data input through the primary input screen image (41) and the second registration data input through the auxiliary input screen image (42, 42").

## Description

The present invention relates to an automated contract engaging method and apparatus (e.g., insurance-policy vending machines that are usually seen in airports) on which customers engage into contracts with contractors. The invention also relates to a computer-readable recording medium in which an automated contract engaging program for realizing the automated contract engaging method is recorded.

Insurance-policy vending machines realize an unattended sale of insurance policies. Such machines are usually seen in airports, etc., and customers only need to input their personal data (name, age, address, sex, telephone number, etc.) on screen images appearing on the display of the machine, in accordance with the instructions shown in the screen image.

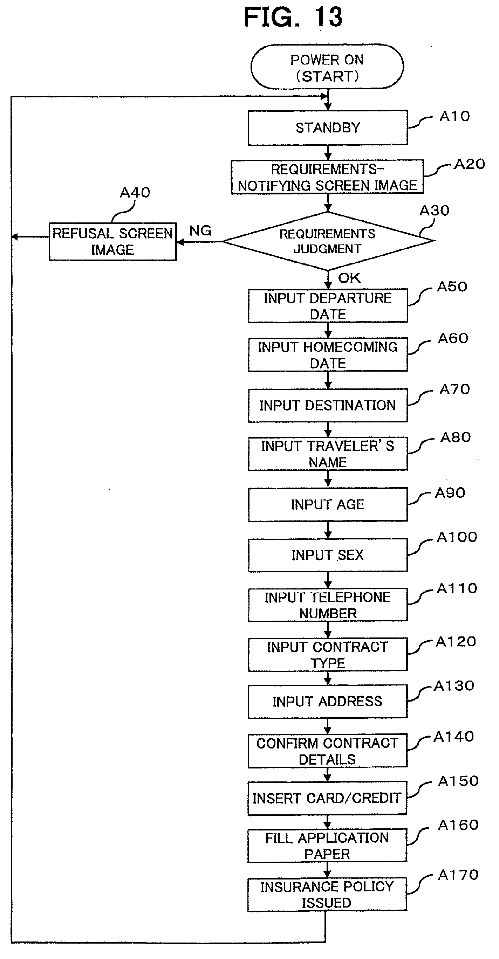

A method of purchasing an insurance policy on a conventional insurance-policy vending machine will now be described with reference made to the flowchart (steps A10 through A170) of FIG. 13.

Upon powered on, the conventional insurance-policy vending machine enters a waiting state (step A10), during which various requirements and limitations on purchasing insurance policies are displayed on the screen in the form of questions (requirements- and limitations-notification) (step A20), such as whether or not it is planned to take part in any venturesome sports or activities, and whether or not a person who would like to be insured (hereinafter will be called "customer") has ever been suffering from any diseases for the past year. Upon receipt of the answers input by the customer (it is not always the customer himself/herself who inputs various kinds of data, but for convenience of explanation, descriptions will hereinafter be made on the assumption that the input is carried out by the customer by himself/herself), the insurance-policy vending machine 1 judges whether to allow the customer to obtain an insurance policy (step A30).

Here, if judged that the customer-supplied answers do not meet the insurance requirements (NG route of step A30), a refusal screen image appears, notifying the customer that his/her application for purchasing the insurance is declined, on the screen of the display 10 (step A40), and then the procedure returns to step A10.

Otherwise if the customer-supplied answers meet the requirements (OK route of step A30), the insurance-policy vending machine asks the customer to input the departure date, homecoming date, destination, name, age, sex, telephone number, contract type, and address, by using an input device such as touch panels and keyboards (steps A50 through A130). The insurance-policy vending machine displays a screen image that shows the details of the insurance being purchased, on the screen of its display, and asks the customer to make the insurance details confirmed (step A140).

If the insurance details are confirmed and agreed with by the customer, the insurance-policy vending machine asks the customer to insert a credit card into its card slot. Upon receipt of the credit card, the insurance-policy vending machine communicates with a credit center via an ISDN line, etc., in order to verify the credit card and to check its credit limit (step A150).

After that, the insurance-policy vending machine produces a hardcopy application form on which printed are the insurance details shown and confirmed in step A140, asking for the customer's signature (step A160). After the signed/executed application form is put into a given posting box, the insurance-policy vending machine prints out the insurance policy (step A170), and then returns to step A10.

In such conventional machines, however, there have been the following problems. When a group of customers (e.g., in case a family or any group is making a trip) purchase insurance policies on the apparatus, the input procedures (steps A10 through A170 of the flowchart of FIG. 13) must be repeated for each of the remaining customers of the group, enforcing the troublesome and time-consuming inconvenience on the customers.

And also, it takes 3 to 4 minutes on average to complete purchasing an insurance policy on the conventional insurance-policy vending machine. Accordingly, if a group constituted of 10 persons intends to buy insurance policies concurrently on the conventional machine, no less than 30 through 40 minutes are required, thus significantly impairing the user-friendliness.

Such a time-consuming process feels significantly annoying, in particular, for travelers, who often rush through an airport, and they could thus hesitate to buy insurance policies on the machine. The insurance companies, therefore, might have been losing potential customers.

It is therefore desirable to provide an automated contract engaging apparatus on which more than one customer may engage into a contract in a fast and convenient manner.

According to the present invention, there is provided an automated contract engaging apparatus on which a group of customers being a first party and having common personal data except at least name engages a single collective contract or a plurality of individual contracts with a second party. The apparatus comprises a display; a display controller for controlling the display so as to show on its screen a primary input screen image, through which personal data of a representative customer of the group is to be input as first registration data, and an auxiliary input screen image, through which at least the name of each of the remaining customers of the group is to be input as second registration data; and a contract processor for processing and executing the single collective contract or the individual contracts with respect to the plural customers based on the first registration data input through the primary input screen image and the second registration data input through the auxiliary input screen image.

As one preferred feature, the automated contract engaging apparatus further comprises an input assisting section for assisting in inputting the personal data of the individual remaining customer of the group using part of the first registration data which part is common to the group.

As another preferred feature, an automated contract engaging apparatus further comprises an input assisting actuator for instructing the input assisting section to input the common personal data of the first registration data as the personal data of the individual remaining customer of the group in response to the instructions of the input assisting actuator.

As still another preferred feature, the common personal data of the first registration data to be input as part of the personal data of the individual remaining customer may be a family name of the representative customer if the group is a family.

As another generic feature, the present invention provides an automated contract engaging apparatus on which a group of customers being a first party engages a single collective contract or a plurality of individual contracts with a second party. The apparatus comprise a display; a display controller for controlling the display so as to show on its screen a primary input screen image, through which personal data of a representative customer of the group is to be input as first registration data, and an auxiliary input screen image, through which at least the number of the remaining customers of the group is to be input as second registration data; and a contract processor for processing and executing the single collective contract or the individual contracts with respect to the plural customers based on the first registration data input through the primary input screen image and the second registration data input through the auxiliary input screen image.

As one preferred feature, an automated contract engaging apparatus further comprises a screen image switch for instructing the display controller so as to switch screen images on the screen of the display from the primary input screen image to the auxiliary input screen image.

As still another generic feature, the present invention provides an automated contract engaging method in which a group of customers being a first party and having common personal data except at least name engages a single collective contract or a plurality of individual contracts with a second party on an automated contract engaging apparatus including a display. The method comprises the steps of: (a) inputting personal data of a representative customer of the group as first registration data; (b) inputting at least the name of each of the remaining customers of the group as second registration data; and (c) processing and executing the single collective contract or the individual contracts with respect to the plural customers based on the first registration data input in the first-named inputting step (a) and the second registration data input in the second-named inputting step (b).

As a preferred feature, the automated contract engaging method further comprises the step of (d) inputting the common personal data of the individual remaining customer of the group using part of the first registration data which part is common to the group. As another preferred feature, the part of the first registration data is input as part of the personal data of the individual remaining customer of the group in response to the instructions of an input assisting actuator associated with the display of the apparatus. And, as still another preferred feature, the common personal data of the first registration data to be input as part of the personal data of the individual remaining customer may a family name of the representative customer if the group is a family.

As a further generic feature, the present invention provides an automated contract engaging method in which a group of customers being a first party engages a single collective contract or a plurality of individual contracts with a second party on an automated contract engaging apparatus including a display. The method comprises the steps of: (a) inputting personal data of a representative customer of the group as first registration data; (b) inputting at least the number of the remaining customers of the group as second registration data; and (c) processing and executing the single collective contract or the individual contracts with respect to the plural customers based on the first registration data input in the first-named inputting step (a) and the second registration data input in the second-named inputting step (b).

As a preferred feature, in the present automated contract engaging method, the first registration data is input through a primary input screen image shown on the display, in the first-named inputting step (a) ; and the second registration data is input through an auxiliary input screen image shown on the screen of the display, in the second-named inputting step (b). As another preferred feature, the automated contract engaging method further comprises the step of (e) switching screen images on the screen of the display from the primary input screen image to the auxiliary input screen image in response to the instructions of a screen image switch associated with the display.

As a still further generic feature, the present invention provides a computer-readable recording medium which records an automated contract engaging program for instructing a computer to perform as internal or external part of an automated contract engaging apparatus which has a display and on which a group of customers being a first party and having common personal data except at least name engages a single collective contract or a plurality of individual contracts with a second party. The program instructs the computer to function as a display controller and a contract processor of the automated contract engaging apparatus.

As a preferred feature, the program further instructs the computer to function as the above-described input assisting section. As another preferred feature, the common personal data of the first registration data to be input as part of the personal data of the individual remaining customer may be a family name of the representative customer if the group is a family.

Other objects and further features of the present invention will be apparent from the following detailed description when read in conjunction with the accompanying drawings.

According to the automated contract engaging apparatus, method, and a computer-readable recording medium which records a program for realizing the present invention, a group of customers, being a first party, is allowed to engage a single collective contract or a plurality of individual contracts with a second party. It is thus possible to guarantee the following advantageous results.
(1) Partly since the automated contract engaging apparatus has a display, and a display controller for controlling the display so as to show on its screen a primary input screen image and an auxiliary input screen image, and partly since the method includes the steps of: (a) inputting personal data of a representative customer of the group as first registration data to the apparatus through the primary input screen image; (b) inputting at least the name of each of the remaining customers of the group as second registration data to the apparatus through auxiliary input screen image; and (c) processing and executing the single collective contract or the individual contracts with respect to the plural customers based on the first registration data input in the first-named inputting step (a) and the second registration data input in the second-named inputting step (b), it is possible to simplify the inputting of the personal data of the individual remaining customers, and also, even in case two or more customers wishes to buy insurance policies concurrently with the representative customer, it is still possible to carry out the insurance purchasing for all the remaining customers of the group in a simple, speedy way.
(2) Since the automated contract engaging apparatus further has an input assisting section for assisting in inputting the personal data of the individual remaining customer of the group using part of the first registration data which part is common to the group, it is possible to input the personal data of each of the remaining customers of the group in a simple way.
(3) Since the automated contract engaging apparatus further has an input assisting actuator for instructing the input assisting section to input the common personal data of the first registration data in response to the instructions of the input assisting actuator, it is possible to input the personal data of each of the remaining customers of the group in a simple way.
(4) Since the common personal data of the first registration data to be input as part of the personal data of the individual remaining customer is a family name of the representative customer if the group is a family, it is possible to dispense with the inputting of the family name of each of the remaining customers of the group.
(5) Partly since the automated contract engaging apparatus has a display, and a display controller for controlling the display so as to show on its screen a primary input screen image and an auxiliary input screen image, and partly since the method includes the steps of: (a) inputting the personal data of a representative customer of the group as first registration data; (b) inputting at least the number of the remaining customers of the group as second registration data; and (c) processing and executing the single collective contract or the individual contracts with respect to the plural customers based on the first registration data input in the first-named inputting step (a) and the second registration data input in the second-named inputting step (b), it is still possible, even in case two or more customers wishes to buy insurance policies concurrently with the representative customer, to carry out the insurance purchasing for all the remaining customers of the group in a simple, speedy way.

The automated contract engaging apparatus further comprises a screen image switch for instructing the display controller so as to switch screen images on the screen of the display from the primary input screen image to the auxiliary input screen image, it is possible to facilitate the inputting of the personal data of each of the remaining customers of the group.
FIG. 1 is a block diagram showing a functional schematic of an insurance policy vending machine (automated contract engaging apparatus) of one embodiment of the present invention;
FIG. 2 is a block diagram showing a schematic of a system containing the insurance policy vending machine of the present embodiment;
FIG. 3 is a diagram showing an example of a primary input screen image;
FIG. 4 is a diagram showing an example of an auxiliary input screen image;
FIG. 5 is a flowchart illustrating a procedure of purchasing an insurance policy on the insurance policy vending machine of the present embodiment;
FIG. 6 is an exemplary screen image through which a representative customer's insurance details are to be confirmed;
FIG. 7 is an exemplary screen image through which the insurance details for accompaniers, persons who are making a trip with the representative customer, are to be confirmed;
FIG. 8 is a modified example of the auxiliary input screen image;
FIG. 9 is a modified example of the screen image on which the representative customer's insurance details are to be confirmed;
FIG. 10 is a flowchart illustrating a modification to the procedure of purchasing an insurance policy on the insurance policy vending machine of the present embodiment;
FIG. 11 is a flowchart illustrating another modification to the procedure of purchasing an insurance policy on the insurance policy vending machine of the present embodiment;
FIG. 12 is another modified example of the auxiliary input screen image; and
FIG. 13 is a flowchart illustrating a procedure of purchasing an insurance policy on a conventional-type insurance policy vending machine.

One preferred embodiment of the present invention will now be described with reference made to the accompanying drawings.

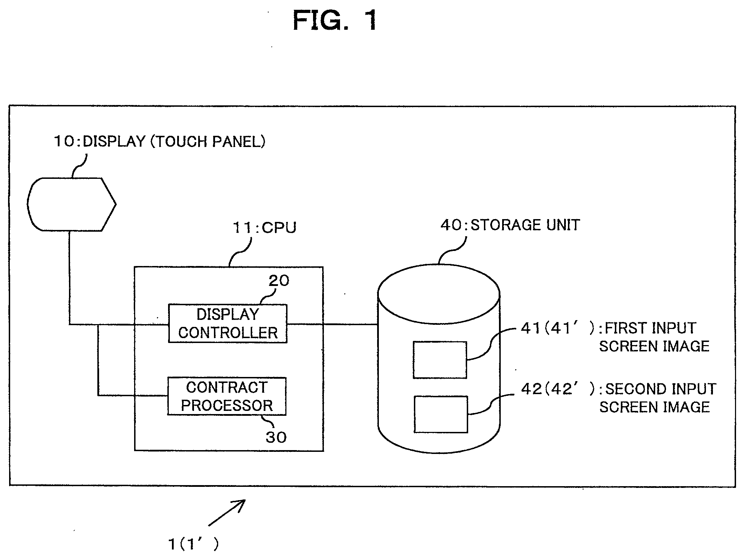

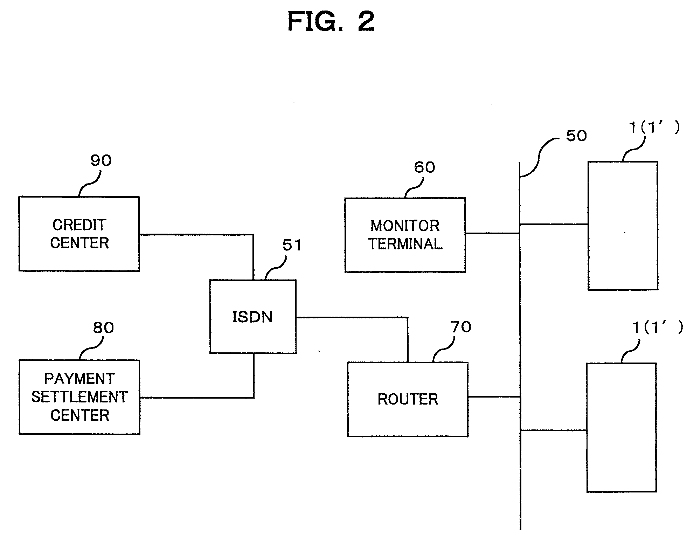

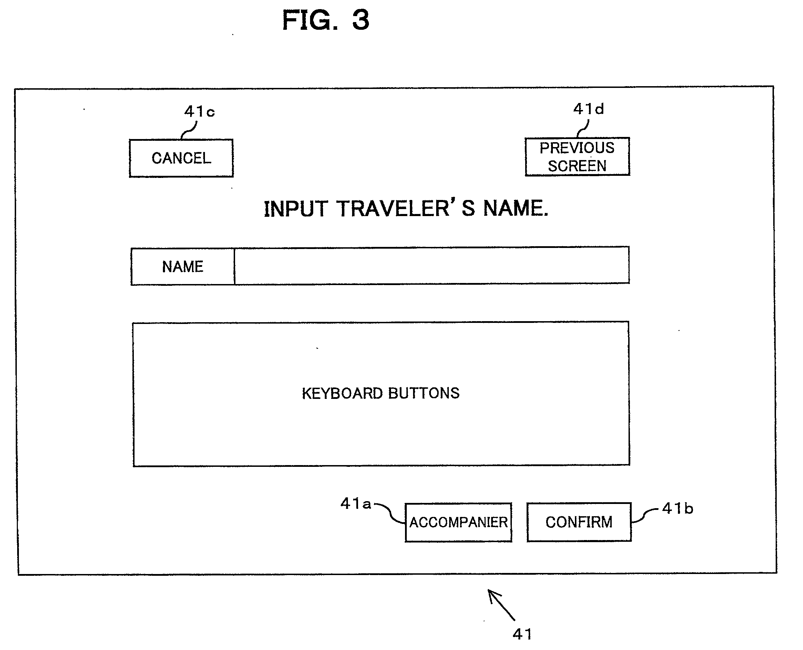

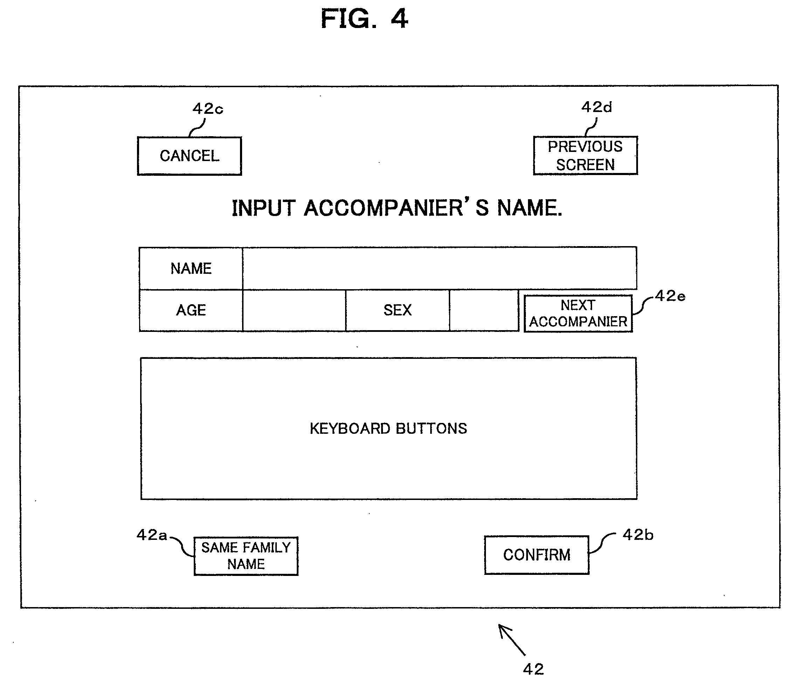

FIG. 1 shows a functional schematic of an insurance policy vending machine (automated contract engaging apparatus) of one embodiment of the present invention; FIG. 2, a schematic of a system construction including the insurance policy vending machine of the present embodiment; FIG. 3, an example of a primary input screen image; and FIG. 4, an example of an auxiliary input screen image.

Automated contract engaging apparatus offers a customer (first party) an automated contract-engaging service with an insurer (second party). Users register his/her personal data (registration data) on the apparatus for purchasing their desired contracts. In the present embodiment, the automated contract engaging apparatus of the present invention is embodied as an insurance policy vending machine 1, which is seen in airports, etc., to provide users with an automated insurance policy-purchasing service. The users register their personal data on the machine for purchasing insurance policies.

The insurance policy vending machine 1, as shown in FIG. 2, is connected with a monitor terminal 60 via a network 50 such as a dedicated line, and is communicably connected further with a credit center 90 and a payment settlement center 80 via a network 50, a router 70, and an ISDN 51.

The monitor terminal 60 monitors whole the system, and the credit center 90 examines credit cards received by the insurance policy vending machine 1 for their credit limit. The payment settlement center 80 computes premiums for insurance policies users would like to buy and charges the credit center 90 corresponding amounts of payments.

The insurance policy vending machine 1 has a CPU 11 that serves as a display controller 20 and a contract processor 30, and also has a storage unit 40 and a display 10, as shown in FIG. 1.

The insurance policy vending machine 1 is realized, for example, in the form of a computer system. The CPU 11 runs an automated insurance vending program stored in the storage unit 40, thereby executing the functions of the display controller 20 and the contract processor 30.

The display 10, which is, say, a touch panel, shows various screen images on its screen. Various data can be input through keyboard images shown on the display screen.

The storage unit 40, which is a storage device such as a magnetic disc and an optical disc, stores various data and applications. The storage unit 40 holds a primary input screen image 41 (FIG. 3) and an auxiliary input screen image 42 (FIG. 4).

The primary input screen image 41 and the auxiliary input screen image 42 are both screen images to be shown on the screen of the display 10. The primary input screen image 41 is used in inputting personal data (first registration data) of a representative customer of a group of customers. In use, more than one screen image, each for inputting thereto the primary user's personal data, such as name, his/her address, telephone number, age, sex, destination, insurance term, contract type, and so on, serves as the primary input screen image 41. For briefness and easiness of descriptions, only the screen image of FIG. 3 through which the primary user's name is input, is presented as the primary input screen image 41 in the present embodiment.

The primary input screen image 41 should by no means be limited to such as is constituted by more than one screen image, and all the above personal data of the representative customer can be input through a single screen image. Various changes or modifications may be suggested without departing from the gist of the invention.

The primary input screen image 41 has a cancel button 41c for procedure cancellation, a previous-screen-image button 41d for displaying the previous screen image (main menu (not shown), for example), and a confirmation button 41b that is selected/pressed for making the input details registered.

Further, the primary input screen image 41 has an accompanier input button 41a. By pressing the accompanier input button 41a, the screen images are switched from the primary input screen image 41 to the auxiliary input screen image 42, through which personal data with respect to each of the remaining customers (persons who make a trip with the representative customer; hereinafter also called "accompaniers"), if any, of the group is to be input. In this manner, the accompanier input button 41a serves as a screen image switch for making an instruction to switch the screen images from the primary input screen image 41 to the auxiliary input screen image 42.

The auxiliary input screen image 42 is a screen image through which at least the name of each of the accompaniers is input as the personal data (second registration data) of the accompaniers. As shown in FIG. 4, the name (given name and family name), age, and sex, of each of the remaining customers are input through the auxiliary input screen image 42.

The auxiliary input screen image 42 has a next accompanier button 42e, a cancel button 42c, a previous screen image button 42d, and a confirmation button 42b. The next accompanier button 42e is selected/pressed if there is still any other accompanier who would like to buy an insurance policy; the cancel button 42c is for canceling the procedure; the previous screen image button 42d is for returning to the previous screen image (the primary input screen image 41, for example); the confirmation button 42b is selected/pressed for making the input details confirmed.

The auxiliary input screen image 42 has a same family name button 42a, which is selected/pressed if the family name of the accompanier is the same as that of the representative customer, that is, in case the group of customers is a family. Upon selection of the same family name button 42a, the "family name" having been input with respect to the representative customer appears in the field labeled "traveler's name".

That is, the CPU 11 forming part of the insurance-policy vending machine 1 of the present embodiment, functions as an input assisting section that assists in inputting the personal data of each of the remaining customers of the group using part (family name, in the present embodiment) of the personal data input with respect to the representative customer, which part is common to the group. The same family name button 42a functions as an input assisting actuator that instructs the CPU 11 to input the common part of the personal data of the representative customer as part of the personal data of the accompaniers.

The display controller 20 controls the display 10 so as to show on its screen a primary input screen image 41 and an auxiliary input screen image 42.

The insurance-policy vending machine 1 has a cash slot (not shown) for receiving payments in cash, and a credit card slot (not shown) for receiving payments by credit card.

The contract processor 30 processes/executes insurance contracts with respect to the representative customer and each of the remaining customers of the group based on the personal data input through the primary input screen image 41 and the auxiliary input screen image 42.

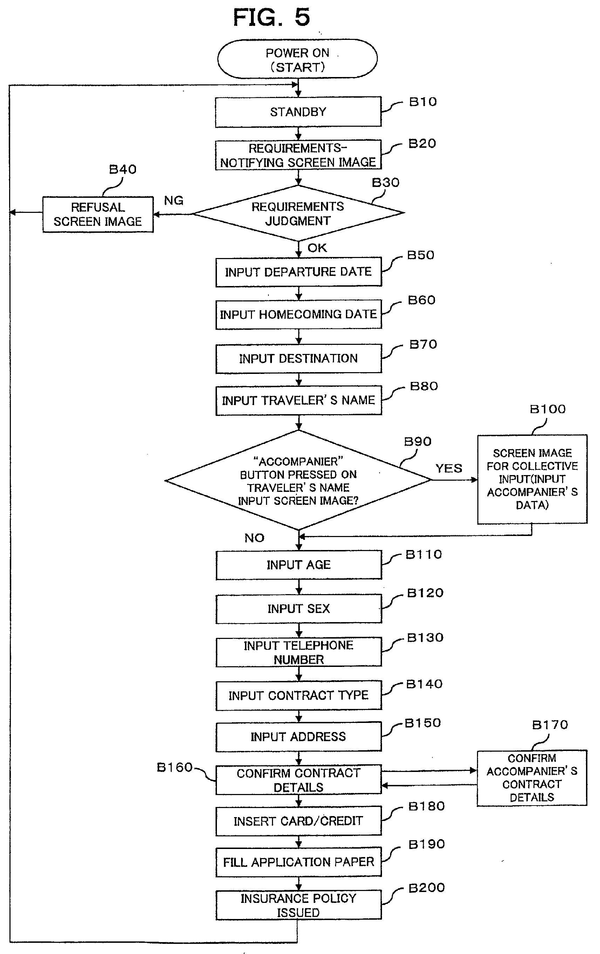

The procedure of purchasing insurance policies on the insurance-policy vending machine 1 of the present embodiment will now be described with reference made to FIGS. 3, 4, 6, and 7, in accordance with the flowchart (steps B10 through B200) of FIG. 5.

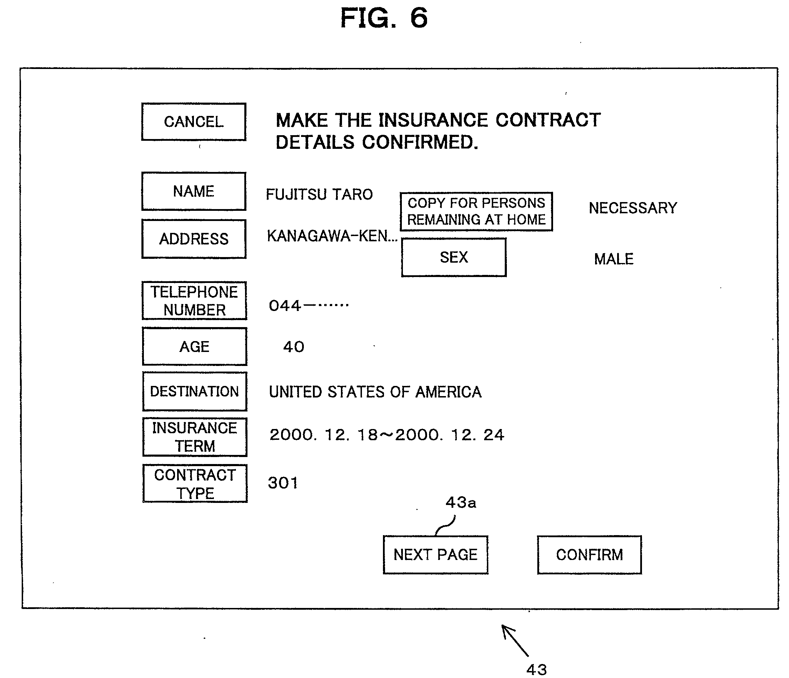

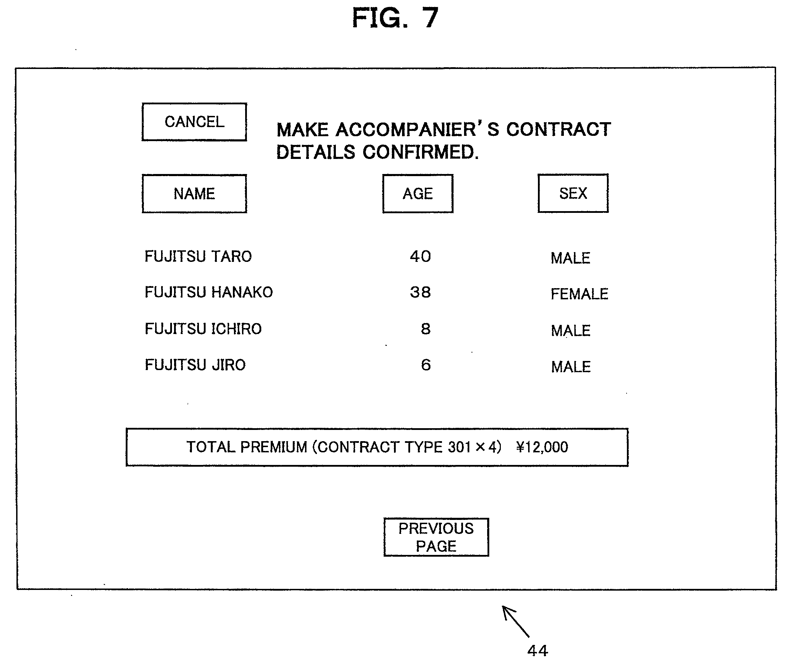

FIG. 6 shows an exemplary screen image through which a representative customer's insurance details are to be confirmed; and FIG. 7, an exemplary screen image through which the accompaniers' insurance details are to be confirmed.

Upon powered on, the insurance-policy vending machine 1 enters a waiting state (step B10), during which various requirements and limitations on purchasing the insurance are displayed on the screen in the forms of questions (requirements- and limitations-notification) (step B20), such as whether or not it is planned to take part in any venturesome sports or activities, and whether or not the customer has ever been suffering from any diseases for the past year. Upon receiving customer-supplied answers to the questions, the insurance-policy vending machine 1 judges whether to allow the customer to be insured (step B30).

Here, if judged that the customer-supplied answers do not meet the insurance requirements (NG route of step B30), the insurance-policy vending machine 1 shows a refusal screen image, notifying the customer that his/her application for purchasing the insurance is declined, on the screen of the display 10 (step B40), and then the procedure returns to step B10.

Otherwise if the customer-supplied answers meet the requirements (OK route of step B30), the display controller 20 controls the display 10 so as to show on its screen the primary input screen image 41 (see FIG. 3), thus asking the customer to input the personal data of the representative customer. Using an input device, such as touch panels and keyboards, there input are the departure date, homecoming date, destination, and name, of the representative customer (steps B50 through B80).

The insurance-policy vending machine 1 (FIG. 3) discriminates whether or not an accompanier input button 41a is selected/pressed on the primary input screen image 41 (see FIG. 3)(step B90). If the discrimination result is positive (YES route of step B90), the display controller 20 controls the display 10 so as to show on its screen the auxiliary input screen image 42 of FIG. 4 (step B100). In accordance with instructions displayed on the auxiliary input screen image 42, the name, age, and sex, of each accompanier are input.

And if the same family name button 42a is selected/pressed on the auxiliary input screen image 42, the family name of the representative customer, which has been input through the primary input screen image 41, appears in the field labeled "traveler's name" on the auxiliary input screen image 42. In this manner, an accompanier whose family name is the same as that of the representative customer can dispense with inputting his/her family name, thereby a simplified input process being realized.

Through this auxiliary input screen image 42, the personal data (e.g., address) other than the name of the accompanier is input (step B100). For the briefness and convenience of description, fields for receiving such other personal data (e.g., address) are not shown in FIG. 4.

The confirmation button 42b is selected/pressed after the input of the personal data of the accompanier, the insurance-policy vending machine 1 asks the customer to input the age, sex, telephone number, contract type, and address, of the representative customer (steps B110 through B150).

Otherwise if the accompanier input button 41a is not selected/pressed (NO route of step B90), the procedure moves also to step B110.

The insurance-policy vending machine 1 shows a representative customer's data-confirming screen image 43 (see FIG. 6) on the screen of the display 10, asking for the confirmation of the insurance details with respect to the primary consumer (step B160). The representative customer's data-confirming screen image 43 of FIG. 6, shows no personal data of any of the accompaniers. It has a next page button 43a, and upon selecting/pressing the next page button 43a, an accompanier's data-confirming screen image 44 of FIG. 7 appears on the screen of the display 10, on which screen image 44 the insurance details with respect to the accompaniers are confirmed whether they are correct or not (step B170).

If the insurance details are confirmed and agreed with by the user, the insurance-policy vending machine 1 asks the customer to insert a credit card into its card slot. Upon receipt of the credit card, the insurance-policy vending machine 1 communicates with a credit center 90 via an ISDN, etc., in order to verify the credit card and to check its credit limit (step B180).

After that, the insurance-policy vending machine 1 produces a hardcopy application form on which the insurance details shown and confirmed in steps B160 and B170 are printed, asking for the customer's signature (step B190). After the signed/executed application form is put into a given posting box, the insurance-policy vending machine 1 prints out the insurance policy (step B200), and then the procedure returns to step B10.

In this manner, with the insurance-policy vending machine 1 of the present invention, it is possible to simplify the purchasing of an insurance policy for each accompanier (each of the remaining customers of a group of customers) by using the auxiliary input screen image 42. So, even in case two or more accompaniers wish to buy insurance policies concurrently with the representative customer, it is possible to purchase insurance policies for all the accompaniers in a simple, speedy manner.

In particular, it is possible to buy an insurance policy for each of the accompaniers just by inputting at least their names on the auxiliary input screen image 42, thereby facilitating the insurance purchasing.

If the family name of each of the accompaniers is the same as that of the representative customer (in case of a family trip, for example), the same family name button 42a is selected/pressed at the input of the name of each accompanier, whereupon the family name of the representative customer, which is input on the primary input screen image 41, appears in the field of the accompanier's name on the auxiliary input screen image 42. That is, if the family name of each of the accompaniers is the same as that of the representative customer, the family name of the accompaniers is no longer required to be input, thus simplifying the input process.

In the above-described embodiment, the name of the accompanier is input as his/her personal data. The present invention should by no means be limited to this, and at least the number of accompaniers (the remaining customers of the group of customers) may be input as the personal data of the accompaniers.

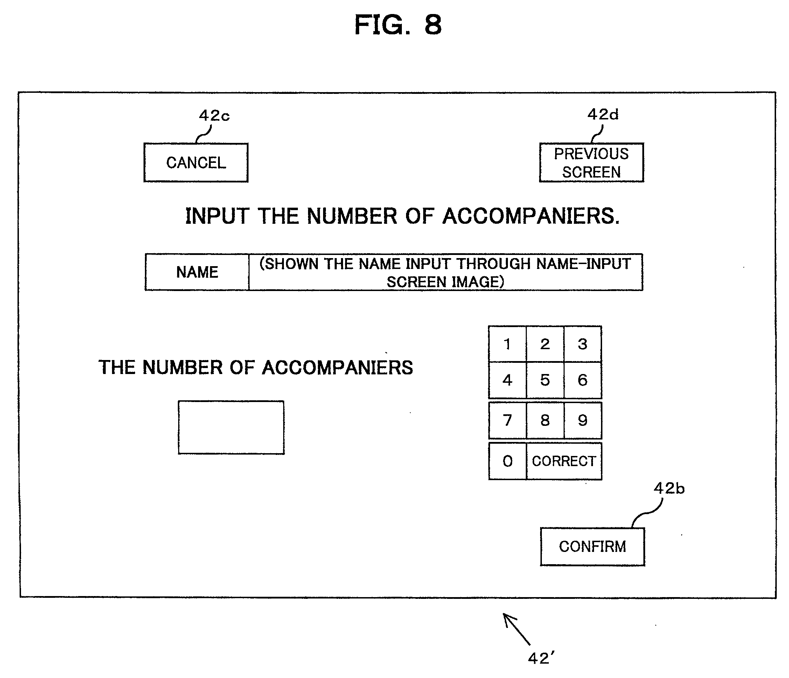

Next, a modified example of the insurance-policy vending machine of the present embodiment will now be described with reference made to FIGS. 8 through 10.

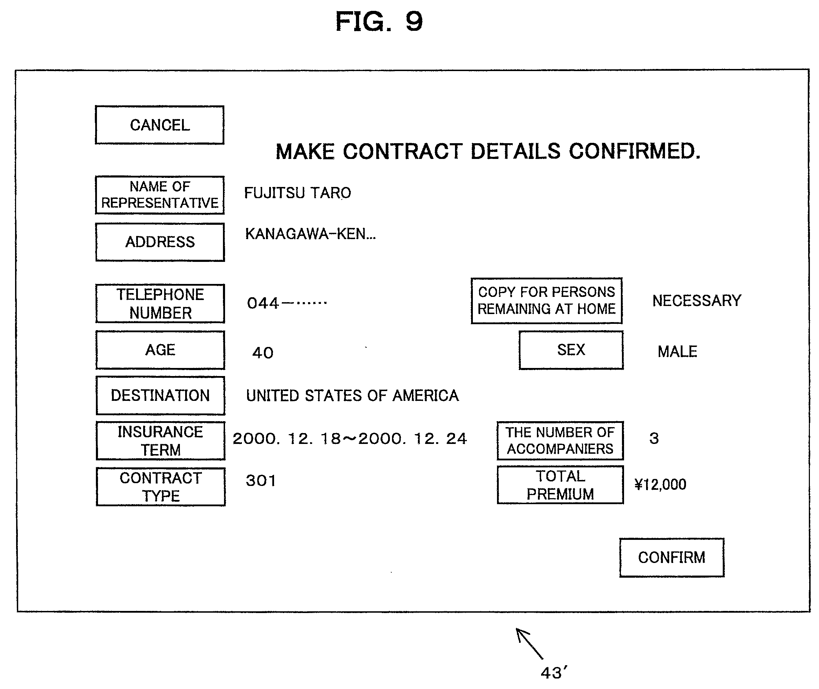

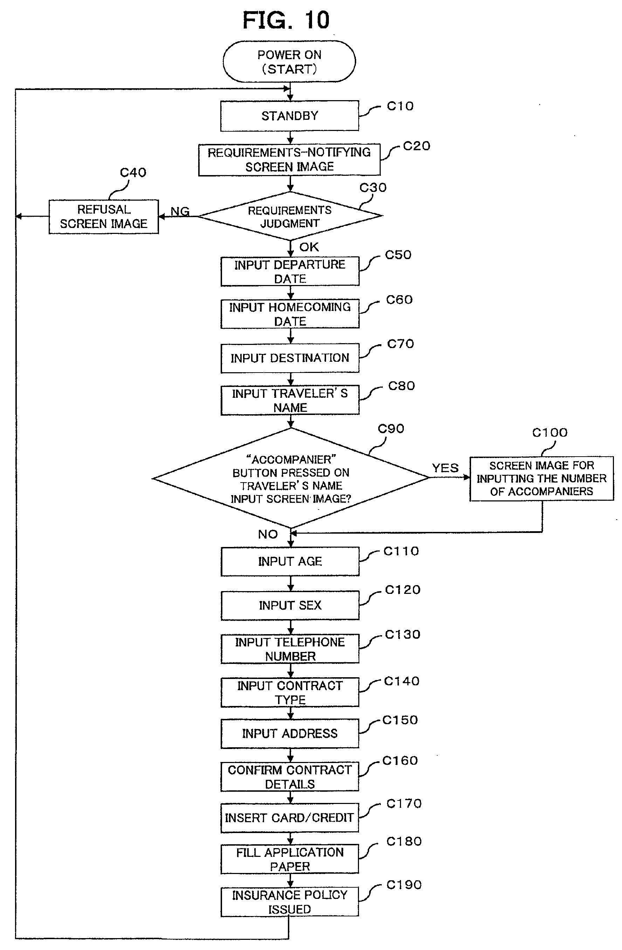

FIG. 8 shows a modified example of the auxiliary input screen image; FIG. 9, a modified example of the screen image on which the representative customer's insurance details are to be confirmed; and FIG. 10, a flowchart illustrating a modified procedure of purchasing insurance on the insurance policy vending machine of the present embodiment.

The insurance-policy vending machine 1' of the present modified embodiment has a construction similar to the insurance-policy vending machine 1 of FIGS. 1 and 2, so their detailed description is omitted here. Like reference numbers designate similar parts or elements throughout several views of the present embodiment and the conventional art, so their detailed description is omitted here.

In the insurance-policy vending machine 1' of the present modification, a storage unit 40 stores a primary input screen image 41, an auxiliary input screen image 42' (see FIG. 8), and a representative customer's data-confirming screen image 43' (see FIG. 9). A display controller 20 controls a display 10 so as to show on its screen the primary input screen image 41, the auxiliary input screen image 42', and the representative customer's data-confirming screen image 43'.

The auxiliary input screen image 42' is an screen image through which the number of accompaniers (second registration data) is to be input, and it is given, as shown in FIG. 8, a field for receiving the number of travelers (accompaniers) accompanying a representative customer, a field in which the name of the representative customer is shown (labeled "traveler's name"), a confirmation button 42b, a cancel button 42c, and a previous screen image button 42d.

The number of accompaniers is input using a touch panel shown on the screen of the display 10. The means for inputting the number should by no means be limited to this, and a keyboard, etc., which is separately provided, may be used.

In the field labeled "traveler's name", the name of the representative customer having been input through the primary input screen image 41 appears automatically.

The representative customer's data-confirming screen image 43' shows the number of accompaniers and the sum of the insurance premiums for confirmation, as well as the like items to those shown in the representative customer's data-confirming screen image 43 of FIG. 6.

Next, the procedure for purchasing insurance policies on the insurance-policy vending machine 1' will now be described with reference made to FIGS. 3, 8, and 9, in accordance with the flowchart (steps C10 through C190) of FIG. 10.

Upon powered on, the insurance-policy vending machine 1' enters a waiting state (step C10), during which various requirements and limitations on purchasing an insurance policy are displayed on the screen in the forms of questions (requirements- and limitations-notification) (step C20), such as whether or not it is planned to take part in any venturesome sports or activities, and whether or not a customer has ever been suffering from any diseases for the past year. Upon receiving the customer-supplied answers to the questions, the insurance-policy vending machine 1' judges whether to allow the customer to be insured (step C30).

Here, if judged that the customer-supplied answers do not meet the insurance requirements (NG route of step C30), the display controller 20 controls the display 10 so as to show on its screen a refusal screen image notifying the customer that his/her application for purchasing insurance is declined (step C40), and then the procedure returns to step C10.

Otherwise if the customer-supplied answers meet the requirements (OK route of step C30), the display controller 20 controls the display 10 so as to show on its screen the primary input screen image 41 (see FIG. 3), thus asking the customer to input the personal data of the representative customer. Using an input device, such as touch panels and keyboards, there input are the departure date, homecoming date, destination, and name, of the representative customer (steps C50 through C80).

The insurance-policy vending machine 1' (FIG. 3) discriminates whether or not an accompanier input button 41a is selected/pressed on the primary input screen image 41 (see FIG. 3)(step C90). If the discrimination result is positive (YES route of step C90), the display controller 20 controls the display 10 so as to show on its screen the auxiliary input screen image 42' of FIG. 8 (step C100). In accordance with the instructions displayed on the auxiliary input screen image 42', the number of accompaniers is input.

The confirmation button 42b is selected/pressed after the input of the number of accompaniers, the insurance-policy vending machine 1' asks the user to input the age, sex, telephone number, contract type, and address, of the representative customer (steps C110 through C150).

Otherwise if the accompanier input button 41a is not selected/pressed (NO route of step C90), the procedure moves also to step C110.

The insurance-policy vending machine 1' shows a representative customer's data-confirming screen image 43' (see FIG. 9) on the screen of the display 10, asking for the confirmation of the insurance details with respect to the primary consumer (step C160). The representative customer's data-confirming screen image 43' of FIG. 9, shows the number of accompaniers the sum of the insurance premiums.

If the insurance details are confirmed and agreed with by the user, the insurance-policy vending machine 1' asks the user to insert a credit card into its card slot. Upon receipt of the credit card, the insurance-policy vending machine 1' communicates with a credit center 90 via an ISDN line, etc., in order to verify the credit card and to check its credit limit (step C170).

After that, the insurance-policy vending machine 1' produces a hardcopy application form on which the insurance details shown and confirmed in steps C160 are printed, asking for the customer's signature (step C180). After the signed/executed application form is put into a given posting box, the insurance-policy vending machine 1' prints out the insurance policy (step C190), and then the procedure returns to step C10.

In this manner, with the insurance-policy vending machine 1' of the present modification, like with the above-described insurance-policy vending machine 1, it is possible to simplify the purchasing of an insurance policy for each accompanier (each of the remaining customers of the group of customers) by using the auxiliary input screen image 42'. So, even in case two or more accompaniers wish to buy insurance policies concurrently with the representative customer, it is still possible to complete insurance purchasing for all the accompaniers in a simple, speedy way.

In particular, it is possible to buy an insurance policy for each of the accompaniers just by inputting at least the number of accompaniers on the auxiliary input screen image 42', thereby facilitating the insurance purchasing.

In the above-described embodiment, the display 10 should by no means be limited to the above-mentioned touch panel, and a combination of a keyboard and a display separately prepared may be also applicable. Various changes or modifications may be suggested without departing from the gist of the invention.

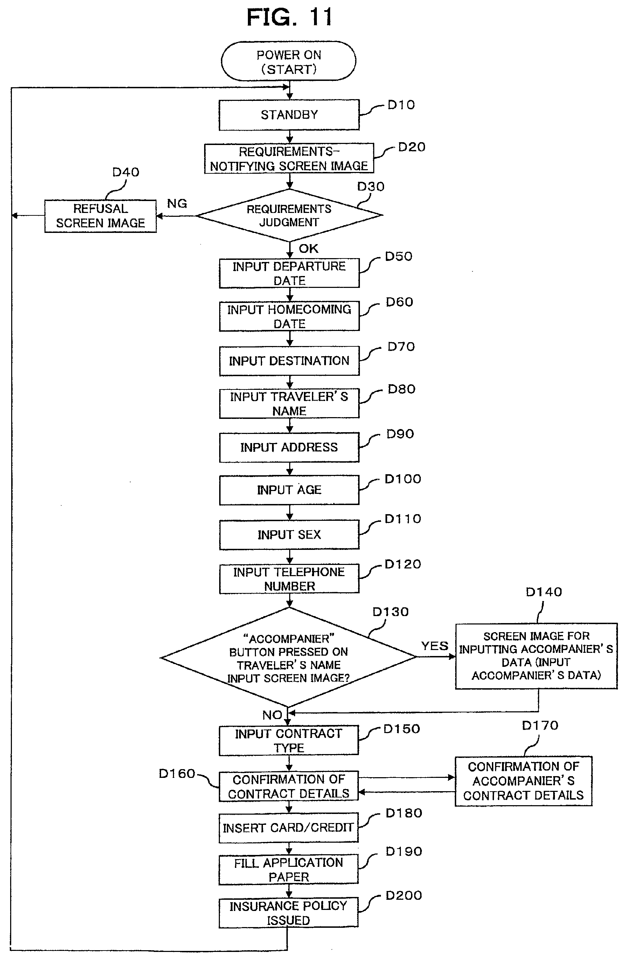

Further, in the above-described embodiment, the input assisting button is the same family name button 42a, which is selected/pressed at inputting the personal data of an accompanier whose family name is the same as that of the representative customer. This invention should by no means be limited to this, and the address, the telephone number, etc., input as the personal data of the representative customer may also be copied for inputting as such data of the accompanier. This will now be described with reference made to the flowchart (step D10 through D200) of FIG. 11. FIG. 13 shows another modified example of the auxiliary input screen image.

Upon powered on, the insurance-policy vending machine 1 enters a waiting state (step D10), during which various requirements and limitations on purchasing an insurance policy are displayed on the screen in the forms of questions (requirements- and limitations-notification) (step D20), such as whether or not it is planned to take part in any venturesome sports or activities, and whether or not the customer has ever been suffering from any diseases for the past year. Upon receiving the customer-supplied answers to the questions, the insurance-policy vending machine 1 judges whether or not the customer is allowed to obtain an insurance policy (step D30).

Here, if judged that the customer-supplied answers do not meet the insurance requirements (NG route of step D30), the display controller 20 controls the display 10 so as to show on its screen a refusal screen image notifying the customer that his/her insurance-purchasing is declined (step D40), and then the procedure returns to step D10.

Otherwise if the customer-supplied answers meet the requirements (OK route of step D30), the display controller 20 controls the display 10 so as to show on its screen the primary input screen image 41 (see FIG. 3), thus asking for the inputting of the personal data of the representative customer. Using an input device, such as touch panels and keyboards, there input are the departure date, homecoming date, destination, and name, of the representative customer (steps D50 through D120).

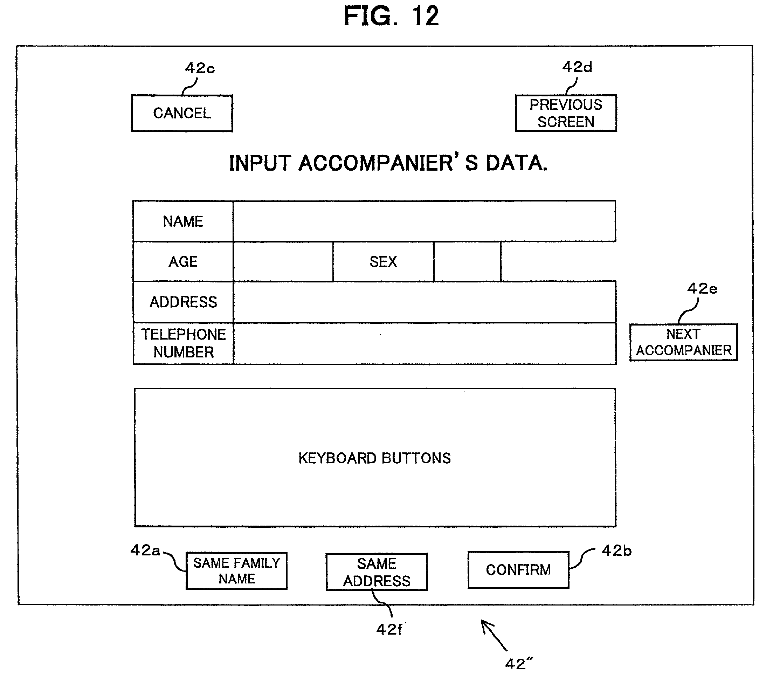

The insurance-policy vending machine 1 (FIG. 3) discriminates whether or not an accompanier input button 41a is selected/pressed on the primary input screen image 41 (see FIG. 3) (step D130). If the discrimination result is positive (YES route of step D130), the display controller 20 controls the display 10 so as to show on its screen the auxiliary input screen image 42" (step D140) of FIG. 12. In accordance with the instructions displayed on the auxiliary input screen image 42", the given name and family name, age, and sex, of each accompanier are input.

And if the same family name button 42a is selected/pressed on the auxiliary input screen image 42", the family name of the representative customer, which has been input through the primary input screen image 41, appears in the field labeled "traveler's name" on the auxiliary input screen image 42". In this manner, an accompanier whose family name is the same as that of the representative customer can dispense with inputting his/her family name, thereby a simplified input process being realized.

Further, if a same address button 42f is selected/pressed on the auxiliary input screen image 42", the address of the representative customer having been input in step D90 appears in the field labeled "address" of the auxiliary input screen image 42". In this manner, an accompanier whose address is the same as that of the representative customer can dispense with inputting his/her address, thereby a simplified input process being realized. Furthermore, an accompanier whose address is in part the same as that of the representative customer (in case, for example, the accompanier and the representative customer live along the same street or in the neighborhood), can also input his/her address in a simplified way, by editing the representative customer's address appearing in the field.

At that time, if the same address button 42f is selected/pressed on the auxiliary input screen image 42", the telephone number, having been input in step D20, of the representative customer may appear in the field prepared for the telephone number of the accompanier to be input thereto. Moreover, any other personal data of the representative customer may similarly appear to serve as the personal data of the accompanier.

After completion of inputting the personal data of each of the accompaniers, if the confirmation button 42b is then selected/pressed, the insurance-policy vending machine 1 asks the customer to input which type of insurance policy is to be purchased (step D150). After that, the same processing as of steps B160 through B200 of FIG. 5 is executed (steps D160 through D200), and the procedure returns to step D10.

In this manner, with the insurance-policy vending machine 1 of the present invention, it is possible to simplify the purchasing of an insurance policy for each accompanier (each of the remaining customers of the group of customers) by using the auxiliary input screen image 42". So, even in case two or more accompaniers wish to buy insurance policies concurrently with the representative customer, it is still possible to purchase insurance policies for all the accompaniers in a simple, speedy way.

If the address of each of the accompaniers is the same as that of the representative customer (in case of a family trip, for example) , the same address button 42f is selected/pressed at the input of the address of each accompanier, whereupon the address of the representative customer, which is input on the primary input screen image 41, appears in the field of the accompanier's address on the auxiliary input screen image 42". That is, if the family name of each of the accompaniers is the same as that of the representative customer, the address of the accompaniers is no longer required to be input, thus simplifying the input process.

How to make it simple to input the personal data of each accompanier should by no means be limited to the above-described embodiment or modifications, and a copy-and-paste function (button, etc.) may also be applicable.

Further, in the above embodiment, images of various types of buttons, such as the same family name button 42a and the same address button 42f, appear on the touch panel in a software-like manner. The present invention should by no means be limited to this, and these buttons may be prepared in hardware.

Still further, in the above embodiment, an insurance-policy vending machine is used as an example of the automated contract engaging apparatus. The present invention should by no means be limited to this, and is also applicable to other types of automated contract engaging machines on which various types of contracts are engaged.

## Claims

1. An automated contract engaging apparatus on which a group of customers being a first party engages into a single collective contract or a plurality of individual contracts with a second party, said apparatus comprising:
a display (10);
a display controller (20) for controlling said display (10) so as to show on its screen a primary input screen image (41), through which personal data of a representative customer of the group is to be input as first registration data, and an auxiliary input screen image (42, 42', 42"), through which data relating to the remaining customers of the group is to be input as second registration data; and
a contract processor (30) for processing and executing the single collective contract or the individual contracts with respect to the plural customers based on said first registration data input through said primary input screen image (41) and said second registration data input through said auxiliary input screen image (42, 42', 42").

2. An apparatus according to claim 1, wherein customers in the first party have at least some common personal data but different names, and the auxiliary input screen image is for inputting at least the name of each of the remaining customers.

3. An automated contract engaging apparatus according to claim 1 or 2, further comprising an input assisting section (11) for assisting in inputting personal data of an individual remaining customer of the group using part of said first registration data which part is common to the group.

4. An automated contract engaging apparatus according to claim 3, further comprising an input assisting actuator (42a, 42f) for instructing said input assisting section (11) to input the common personal data of said first registration data as the personal data of the individual remaining customer of the group in response to the instructions of said input assisting actuator (42a, 42f).

5. An automated contract engaging apparatus according to claim 4, wherein the common personal data of said first registration data to be input as part of the personal data of the individual remaining customer is a family name of the representative customer if the group is a family.

6. Apparatus according to claim 1, wherein the auxiliary input screen is for inputting at least the number of remaining customers in the group.

7. An automated contract engaging apparatus according to any of the preceding claims, further comprising a screen image switch (41a) for instructing said display controller (20) to switch screen images on the screen of said display (10) from said primary input screen image (41) to said auxiliary input screen image (42, 42', 42").

8. An automated contract engaging method in which a group of customers being a first party engages into a single collective contract or a plurality of individual contracts with a second party on an automated contract engaging apparatus including a display (10), said method comprising the steps of:
(a) inputting personal data of a representative customer of the group as first registration data;
(b) inputting data relating to the remaining customers of the group as second registration data; and
(c) processing and executing the single collective contract or the individual contracts with respect to the plural customers based on said first registration data input in the first-named inputting step (a) and said second registration data input in the second-named inputting step (b).

9. A method according to claim 8, wherein customers in the first party have at least some common personal data but different names, and in step (b) at least the name of each of the remaining customers is input.

10. An automated contract engaging method according to claim 8 or 9, further comprising the step of (d) inputting common personal data of an individual remaining customer of the group using part of said first registration data which part is common to the group.

11. An automated contract engaging method according to claim 10, wherein the part of said first registration data is input as part of the personal data of the individual remaining customer of the group in response to the instructions of an input assisting actuator (42a, 42f) associated with the display (10) of the apparatus.

12. An automated contract engaging method according to claim 11, wherein the common personal data of said first registration data to be input as part of the personal data of the individual remaining customer is a family name of the representative customer if the group is a family.

13. A method according to claim 8, wherein, in step (b), at least the number of remaining customers in the group is input.

14. An automated contract engaging method according to any of claims 8 to 13, wherein
said first registration data is input through a primary input screen image (41) shown on the display (10), in the first-named inputting step (a); and
said second registration data is input through an auxiliary input screen image (42, 42', 42") shown on the screen of the display (10), in the second-named inputting step (b).

15. An automated contract engaging method according to claim 14, further comprising the step of switching screen images on the screen of the display (10) from said primary input screen image (41) to said auxiliary input screen image (42, 42', 42") in response to the instructions of a screen image switch (41a) associated with the display (10).

16. A computer-readable recording medium which on which is recorded an automated contract engaging program for instructing a computer to function as an internal or external part of an automated contract engaging apparatus which has a display (10) and on which a group of customers being a first party engages into a single collective contract or a plurality of individual contracts with a second party, wherein said program instructs the computer to function as the following :
a display controller (20) for controlling the display (10) so as to show on its screen a primary input screen image (41), through which personal data of a representative customer of the group is to be input as first registration data, and an auxiliary input screen image (42, 42', 42"), through which data relating to the remaining customers of the group is to be input as second registration data; and
a contract processor (30) for processing and executing the single collective contract or the individual contracts with respect to the plural customers based on said first registration data input through said primary input screen image (41) and said second registration data input through said auxiliary input screen image (42, 42', 42").

17. A computer-readable recording medium according to claim 16, wherein customers in the first party have at least some common personal data but different names, and the auxiliary input screen is for inputting at least the name of each of the remaining customers.

18. A computer-readable recording medium according to claim 16 or 17, wherein said program further instructs the computer to function as an input assisting section (11) for assisting in inputting common personal data of an individual remaining customer of the group using part of said first registration data which part is common to the group.

19. A computer-readable recording medium according to claim 18, wherein said input assisting section (11) inputs part of said first registration data as part of the personal data of the individual remaining customer of the group in response to the instructions of an input assisting actuator (42a, 42f) associated with the display (10) of the apparatus.

20. A computer-readable recording medium according to claim 19, wherein the common personal data of said first registration data to be input as part of the personal data of the individual remaining customer is a family name of the representative customer if the group is a family.

21. A computer-readable storage medium according to claim 16, wherein the auxiliary input screen is for inputting at least the number of remaining customers in the group.

22. A computer-readable recording medium according to any of claims 16 to 21, wherein said display controller (20) controls the display (10) so as to switch screen images on the screen of the display (10) from said primary input screen image (41) to said auxiliary input screen image (42, 42', 42") in response to the instructions of the screen image switch (41a).

23. A computer program which, when run on a computer, causes it to function as an apparatus according to any of claims 1 to 7.

24. A computer program which, when run on a computer, causes it to carry out a method according to any of claims 8 to 15.

## Amended claims

### Amended claims in accordance with Rule 86(2) EPC.

**1.** An automated contract engaging apparatus on which a group of customers being a first party engages into a single collective contract or a plurality of individual contracts with a second party, said apparatus comprising:
a display (10);
a display controller (20) for controlling said display (10) so as selectively to show on its screen a primary input screen image (41), through which personal data of a representative customer of the group is to be input as first registration data, and an auxiliary input screen image (42, 42', 42"), through which data relating to another customer of the group is to be input as second registration data;
data processing means (11) for reading data input via the primary input screen image (41) and the auxiliary input screen image (42, 42', 42"); and
a contract processor (30) for receiving the first registration data and the second registration data from the data processing means and for processing and executing the single collective contract or the plurality of individual contracts based on said data,
wherein :
the display controller is arranged to display at least part of the data input via said primary input screen image (41) in said auxiliary input screen image (42, 42', 42") when displaying said auxiliary input screen image; and
the data processing means (11) is arranged supply to the contract processor (30) data input via said primary input screen image (41) as first registration data, and data input via said auxiliary input screen image (42, 42', 42") together with data input via said primary input screen image (41) and displayed in said auxiliary input screen image (42, 42', 42") as second registration data.

**2.** Apparatus according to claim 1, wherein customers in the first party have at least some common personal data but different names, and the auxiliary input screen image is for inputting at least the name of a remaining customer.

**3.** Apparatus according to claim 1 or 2, wherein the data processing means (11) comprises input assisting means for assisting in inputting personal data of an individual remaining customer of the group using part of said first registration data which part is common to the group.

**4.** Apparatus according to claim 3, further comprising an input assisting actuator (42a, 42f) for instructing said input assisting means to read the common personal data of said first registration data as the personal data of the individual remaining customer of the group in response to the instructions of said input assisting actuator (42a, 42f).

**5.** Apparatus according to claim 4, wherein the common personal data of said first registration data to be input as part of the personal data of the individual remaining customer is a family name of the representative customer.

**6.** Apparatus according to claim 1, wherein the auxiliary input screen is for inputting at least the number of remaining customers in the group.

**7.** Apparatus according to any of the preceding claims, further comprising a screen image switch (41a) for instructing said display controller (20) to switch screen images on the screen of said display (10) from said primary input screen image (41) to said auxiliary input screen image (42, 42', 42").

**8.** A method of operating an automated contract engaging apparatus on which a group of customers being a first party engages into a single collective contract or a plurality of individual contracts with a second party, said apparatus comprising a display (10), a display controller (20), data processing means (11) and a contract processor, the method comprising the steps of:
controlling the display (10) so as selectively to show on its screen a primary input screen image (41), through which personal data of a representative customer of the group is to be input as first registration data, and an auxiliary input screen image (42, 42', 42"), through which data relating to another customer of the group is to be input as second registration data; and
reading data input via the primary input screen image (41) and the auxiliary input screen image (42, 42', 42"),
wherein :
at least part of the data input via said primary input screen image (41) is displayed in said auxiliary input screen image (42, 42', 42") when displaying said auxiliary input screen image; and
data input via said primary input screen image (41) is supplied to the contract processor (30) as first registration data, and data input via said auxiliary input screen image (42, 42', 42") together with data input via said primary input screen image (41) and displayed in said auxiliary input screen image (42, 42', 42") is supplied to the contact processor as second registration data.

**9.** A method according to claim 8, wherein customers in the first party have at least some common personal data but different names, and at least the name of a remaining customer is input via the auxiliary input screen image.

**10.** An automated contract engaging method according to claim 8 or 9, wherein common personal data of an individual remaining customer of the group is input using part of said first registration data which part is common to the group.

**11.** An automated contract engaging method according to claim 10, wherein the part of said first registration data is input as part of the personal data of the individual remaining customer of the group in response to the instructions of an input assisting actuator (42a, 42f) associated with the display (10) of the apparatus.

**12.** An automated contract engaging method according to claim 11, wherein the common personal data of said first registration data to be input as part of the personal data of the individual remaining customer is a family name of the representative customer if the group is a family.

**13.** A method according to claim 8, wherein at least the number of remaining customers in the group is input via the auxiliary input screen image.

**14.** An automated contract engaging method according to any of claims 8 to 13, further comprising the step of switching screen images on the screen of the display (10) from said primary input screen image (41) to said auxiliary input screen image (42, 42', 42") in response to the instructions of a screen image switch (41a) associated with the display (10).

**15.** A computer-readable recording medium on which is recorded a program which, when run on a computer, causes it to function as the automated contract engaging apparatus according to any of claims 1 to 7.

**16.** A computer program which, when run on a computer, causes it to function as an apparatus according to any of claims 1 to 7.

**17.** A computer program which, when run on a computer, causes it to carry out the method of any of claims 8 to 14.
